# EUROPEAN PATENT SPECIFICATION

(11) **EP 0 780 998 B1**
(45) Date of publication and mention of the grant of the patent: **09.04.2003**
(21) Application number: 96119806.6
(22) Date of filing: 10.12.1996
(51) Int. Cl.: H04B 7/185

(54) **Intersatellite communication system with switching at subchannel level using bent-pipe architecture**
Intersatellitenkommunikationsanordnung mit Unterkanalschaltung und Bent-Pipe-Architektur
Système de communication intersatellite avec commutation au niveau de sous-canal utilisant une architecture de type bent-pipe

(30) Priority: 21.12.1995 CA 2165875; 17.09.1996 US 715065
(43) Date of publication of application: 25.06.1997
(73) Proprietor: COM DEV LTD., Cambridge, Ontario N1R 7H6 (CA)
(72) Inventor: Peach, Robert, Cambridge, Ontario NIS 4B3 (CA); Beauchamp, Gary, Cambridge, Ontario NIT 1 M4 (CA); O'Donovan, Val, Cambridge, Ontario NIS 2N8 (CA)
(74) Representative: Winter, Brandl, Fürniss, Hübner, Röss, Kaiser, Polte Partnerschaft

(56) References cited:
- GB-A- 2 169 474
- BELLACCINI S ET AL: "Synchronization and routing aspects in a cluster of satellites with on-board processing" GLOBECOM '86: IEEE GLOBAL TELECOMMUNICATIONS CONFERENCE. COMMUNICATIONS BROADENING TECHNOLOGY HORIZONS. CONFERENCE RECORD (CAT. NO.86CH2298-9), HOUSTON, TX, USA, 1-4 DEC. 1986, 1986, NEW YORK, NY, USA, IEEE, USA, pages 1713-1719 vol.3, XP002003161
- G.MARAL ET AL.: "Satellite Communications sytems" 1993 , JOHN WILEY & SON , CHICHESTER, GB XP002072563 * page 197 - page 208 *

## Description

This invention relates to a multibeam bent-pipe communication satellite according to the preamble of claim 1.

The early communications satellites were used as "dumb" repeaters operating in a bent-pipe mode. ("Bent-pipe" is a term in general use and well understood by those skilled in the art). Initially, no significant processing other than signal amplification was carried in the satellite payload and the information relayed back to Earth was a replica of the information from the source. The advantages of this type of satellite were simplicity and low front-end capital and launch costs. As satellite systems became more sophisticated, multibeam satellites, still operating in the bent-pipe mode were introduced whereby one or more sources could relay messages to several destinations. The architecture of these systems was still fairly rigid and allowed little or no flexibility in switching between sources or destinations. Typical were the first broadcast satellites that relayed information to several geographic regions. An example would be the system described in US-A-3,541,553.

Later, satellites with on-board switching capability were introduced. In these systems, each incoming beam from Earth would, typically, carry several frequency-multiplexed channels. Existing fixed satellite service (FSS) systems now generally employ multibeam satellites having input demultiplexers near the front end of the satellite which separate incoming beams into a number of transponder channels. Prior to high-power amplification, these channels are interbeam switched by means of coaxial switches so that communications intelligence arriving via one of the incoming beams can be directed to one of several output beams. Path selection is at the discretion of ground control. Connections are made on a relatively broad channel basis, i.e. all of the information in one transponder channel is switched in its entirety. In some instances, by using power-combining techniques, information from two or more sources could be sent to a common destination. This approach is, however, costly and wasteful of resources.

Other, quite separate, developments have concerned the enabling of satellites to communicate with each other by the use of direct electromagnetic (e.g. radio or optical) links between the satellites. These intersatellite links are used to pass intelligence (for control or communications) between orbiting satellites. In US-A-4,691,882 (to "Young") for example, clusters of cooperating communications satellites act in unison as one large satellite and are radio-linked together. In other instances, defense and other government satellite systems, e.g. TDRSS (the Traffic and Data Relay Satellite System) use intersatellite links.

Also, a number of important developments have occurred in the mobile communications markets. For the hand-held-terminal market, interest is focused on low-earth-orbit (LEO) and medium-earth-orbit (MEO) satellite constellations. The geostationary (GEO) market is also undergoing major changes. Traditional point-to-point communications between major population centers are being converted to optical fibre and operators are now looking to provide a greater number of narrow-band links, principally to areas that are not well served by existing terrestrial infrastructure. To this end, proposed satellites have more beams, higher effective isotropic radiated power (EIRP) and greater interbeam connectivity and users will require less expensive ground terminals. These trends are being accelerated by data compression which is forcing operators to lease comparatively narrow bandwidths. Developments have been described in which global systems of orbiting satellites will be commissioned to provide personal communications (similar to cellular telephone service) anywhere on the Earth. Each of these satellites will be linked by intersatellite beams to as many as eight other satellites. US-A-5,129,095 (Davis et al) is an example of such a system. Recently proposed LEO systems (e.g. *Iridium* and *Teledesic*)¹ will support intersatellite links.

The present and proposed communications systems using intersatellite links are constrained by the type of signals they can handle, especially with regard to protocols used and particular modulation methods employed. They tend to rely on digital switching technology and make extensive use of "smart" on-board processors. Decisions are made, at least in part, on board the satellite. Satellites employing these types of on-board digital processors are not "bent pipe" systems since the data transmitted to the satellite is partially extracted by the "smart" processor in order to determine where to route the data. Such a digital processor is also known as a "regenerative" processor, as distinguished from a bent-pipe or "transparent" processor which does not extract routing information from the incoming data transmission. For these "regenerative" systems to work, subscribers are required to procure special transceivers (i.e. ground stations) which are not backward compatible and hence generally unusable with existing bent-pipe systems. *Globalstar*² is one system of global telecommunications proposed that uses bent-pipe technology. However, it relies on the terrestrial communications infrastructure for inter-regional communications: it does not propose intersatellite links.
¹*Iridium* and *Teledesic* are Registered Trade Marks.

With respect to the fixed satellite service systems, the mounting demand for greater connectivity and leases of fractions of transponders cannot be satisfied by simply increasing the number of beams since this aggravates the connectivity problem and leads to reduced transponder utilization efficiency. The connectivity problem was addressed in US-A-4,706,239 (to "Ito"), wherin it is suggested that every incoming radio-frequency beam is divided first into transponder channels by means of a demultiplexer as is well known in the art. Each transponder channel is further divided into subchannels by use of surface-acoustic-wave (SAW) filters. Interbeam switching is then carried out using GaAs FET switches at the relatively narrow subchannel level, rather than at the channel level as in prior systems. The output of the switches are subsequently multiplexed back into transponder channels and amplified and multiplexed for the down-link beams. In this manner, the information contained in a channel does not have to be switched as a whole, but instead can be divided and routed to a number of outgoing beams.
²*Globalstar* is a Registered Trademark

The problem of full interconnectivity was also addressed in US-A-5,274,627 (to "De Santis"). In the De Santis system, the incoming continuous-wave frequency-division multiple-access signal is transformed into periodic-burst time-division signals. They are routed via a switching matrix and transformed back to the frequency domain prior to channeling to the desired down-link beam or beams as continuous-wave frequency-division-multiplex signals. In the De Santis arrangement, the system is transparent to the form or protocol of the incoming signals. Although De Santis discloses a complex system for interbeam switching, it does not disclose any application of intersatellite links.

The *Inmarsat 3* geostationary mobile communications system, employs on-board subchannelizing technology. The system makes use of multiple hops between Earth and satellite to communicate between two mobile users. For example, a ship communicating with a second ship would send information signals to the satellite. These signals would be switched in the satellite and sent back to Earth for control and billing purposes, resent to the satellite for further processing and then relayed to the second ship.

In a further improvement in subchannelizing technology, the present applicant has determined that, by combining the coaxial switching methods commonly used in the prior art with subchannelization methods on a portion of the transponder channels, efficiency gains similar to those of the Ito full subchannelization system can be obtained with greatly reduced hardware complexity, power consumption and launch costs. For example, in an 8-beam, 8-channel per beam satellite, by subchannelizing all 8 channels, as proposed by Ito, it is possible to produce a 25 percent improvement in transponder utilization over previous systems. However, if the same 8-beam, 8-channel system were to subchannelize only four of the eight channels, the system would require some 50 percent less hardware than the Ito system requires, and transponder utilization would be only slightly degraded (i.e. a 20 percent capacity improvement over the prior art channel-switching satellite instead of the 25 percent of the Ito system). Applicants further refer to the teaching of their United States Patent US-A-5 822 312, entitled "Repeaters for Multibeam Satellites". This application discloses several bent-pipe partial subchannelization systems as discussed above, including both analog subchannelizing architectures and a transparent digital architecture. The analog architectures combine a coaxial switching network for switching at the channel level with a subchannel switching network connected to a portion of the incoming channels which utilizes surface acoustic wave (SAW) filter banks for subchannel selection and a solid state switching matrix. The transparent digital architecture employs digital filtering and switching at the subchannel level in parallel with a coaxial switching network for switching at the channel level.

### Summary of the Invention

With the advent of satellite communications systems that propose to respond to the increasing demand for more flexibility and capacity while remaining competitive with other communications systems, greater ingenuity is required to offer new services at economically competitive cost. It is therefore the object of the present invention to improve a multi-beam bent-pipe satellite according to the preamble of claim 1 in such a way that it does not restrict the nature or protocol of the information signals being transmitted.

This object is solved by the characterizing features of claim 1.

The present invention, thus, responds to the system requirements outlined above by providing a new form of intersatellite link that maintains the bent-pipe mode of operation. As noted above, the system described in our United States Patent US-A-5 822 312 also helps accomplish the objectives by providing partial subchannelization for a bent-pipe satellite system, and can be used in conjunction with the invention described herein to provide more pronounced benefits.

### Brief Description of the Drawings

In the drawings:
Figure 1 shows the arrangement of a typical satellite incoming beam.
Figure 2 shows a prior art system that utilizes a standard microwave payload with partial transponder utilization.
Figure 3 shows the prior art improvement as described in the Ito patent.
Figure 4 shows a prior art fixed satellite service system using an intersatellite link.
Figure 5 shows one embodiment of the invention incorporated in an FSS system and in which the intersatellite link is used to serve, simultaneously, several incoming beams.
Figure 6 shows another embodiment of the invention incorporated in an FSS system in which a broadcast mode is used.
Figure 7 shows an embodiment of the invention in which the intersatellite link serves two satellites, only one of which is utilizing subchannelizing technology.
Figure 8 shows the use of the invention in relation to a constellation of communications satellites.

Not shown in the drawings or discussed to any extent in the description are the standard circuit components found in a satellite repeater system. These include the low-noise amplifiers, the frequency down-converters (e.g. from 14 GHz to 12 GHz) and the redundancy selection circuits.

### Detailed Description of Preferred Embodiments

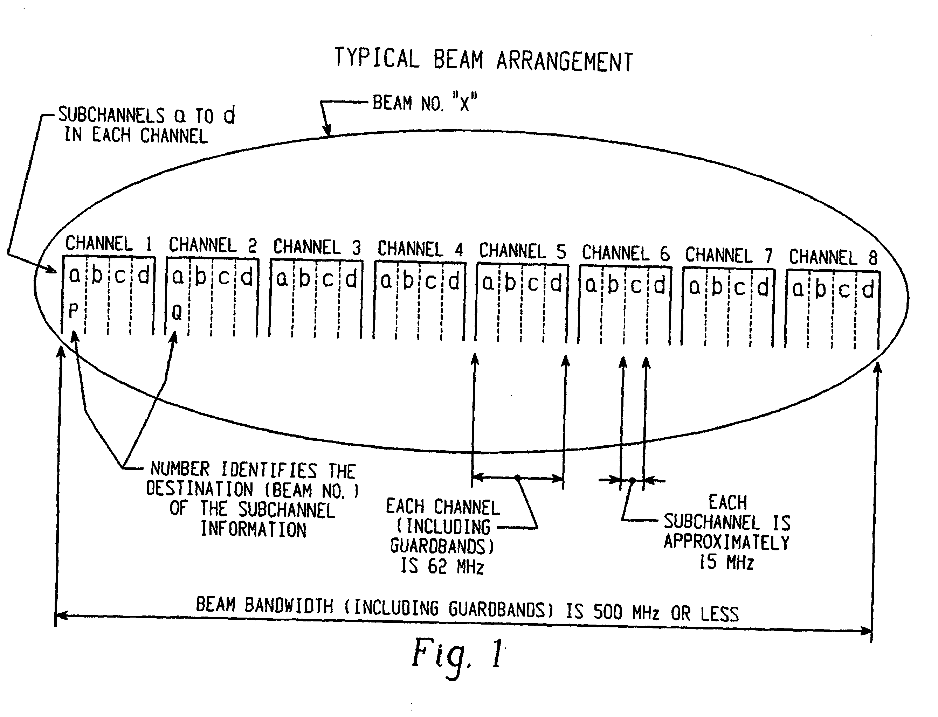

Figure 1 in the drawings shows a typical beam (in the drawing it is given the arbitrary number "X") used in frequency-division-multiplex (FDM) satellite transmissions. Although the example given is for an incoming beam (i.e. a beam received by a communications satellite), outgoing beams (i.e. beams transmitted from a communications satellite) would have a similar make-up. The following is an example only and the quantities specified for bandwidths and frequencies used are purely notional. For instance, while the channels are described as being of equal bandwidth and the subchannels are also described as being of equal bandwidth, this is not necessarily the case and design considerations may require the channels to be of different bandwidths, and the subchannels to be of different bandwidths. Furthermore, the number of channels per beam need not be eight since there could be a different number of channels (greater or fewer than eight) in each beam.

In the example shown in Figure 1, each beam is divided into eight non-overlapping frequency-separated channels. Each channel (including interchannel guardbands) is about 62 MHz in bandwidth and thus the bandwidth of the beam itself is no more than 500 MHz. The center frequency of the beam could be at some regular communication frequency (e.g. L-Band, S-Band, C-Band, Ku-Band or Ka-Band). Every channel is divided into four equal subchannels, each subchannel having a bandwidth no greater than 15 MHz. (Some allowance may have to be made for guard bands).

For purpose of discussion in this disclosure, the first to fourth subchannels in each channel are identified respectively by the letters "a", "b", "c" and "d". In the example, each subchannel is destined for a particular output destination (i.e. beam) and is accordingly labelled to facilitate understanding of the description. For example, a subchannel destined for downlink beam "P" carries an appropriate identifier in the drawings. More specifically, a subchannel in channel 1 of beam 1 that has the identifier "a28" is a subchannel "a" (the first of the four subchannels in channel 1) that is destined for the outgoing beam 28. The output will be placed in beam 28, channel 1, subchannel "a".

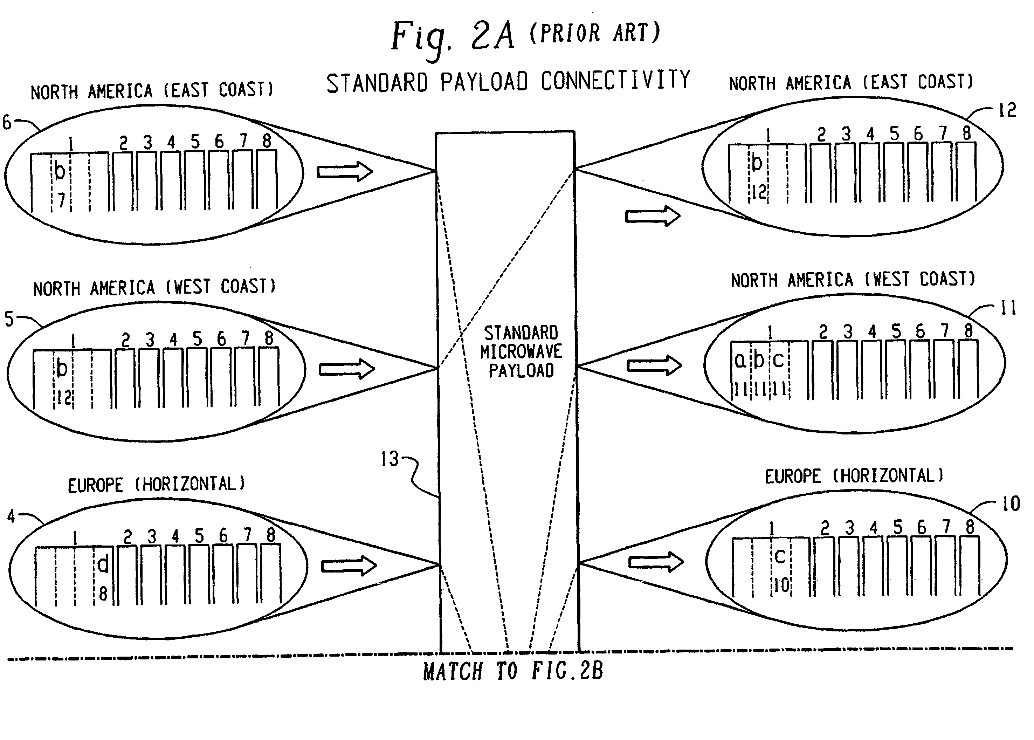

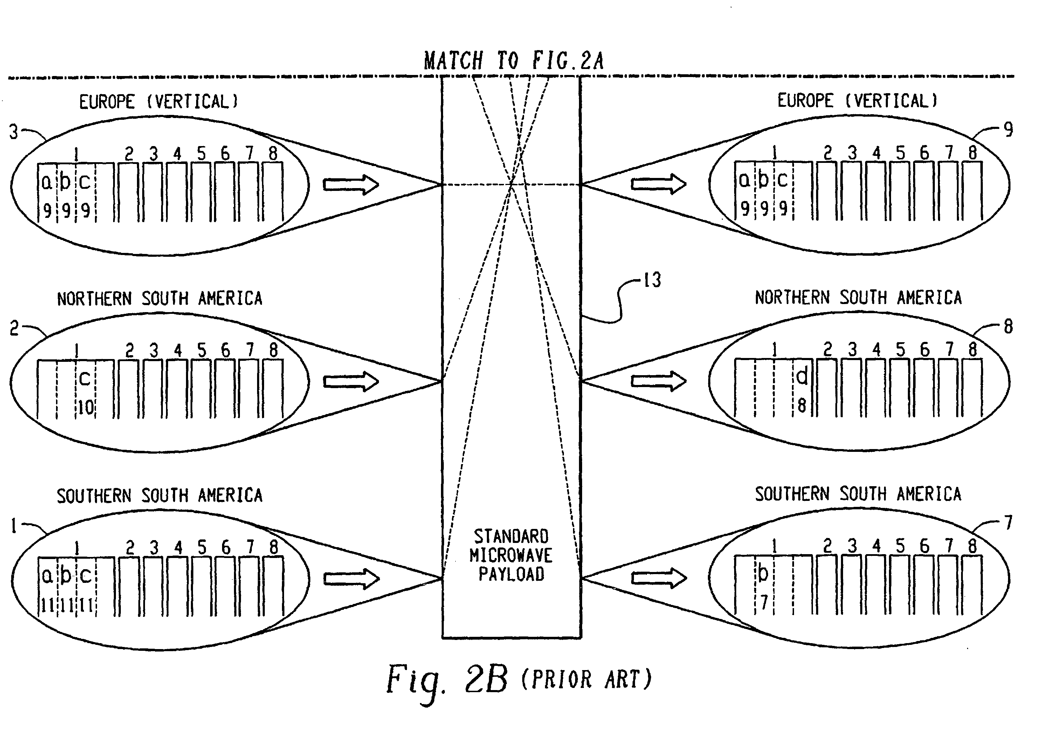

Referring to the prior art in Figure 2, consideration is given to a 6-beam satellite in which each beam is divided into 8 channels. In the drawing only the first channel in each input and output beam is shown in detail, i.e. each of the first channels is shown as containing four subchannels of communications information labeled "a" to "d" respectively. It will be understood that each of the other channels in each beam will also generally contain several subchannels of communications information as described with reference to Figure 1. The input beams 1 to 6 are derived from terrestrial sources as shown. Output beams 7 to 12 are directed to terrestrial destinations through the satellite payload 13 as is well known in the art. It should be understood that although all beams are shown as containing eight channels, this may not be the case and more or fewer channels may be transmitted in any beam. Similarly, there may be more or fewer than four subchannels in each channel.

The architecture of the satellite system shown in Figure 2 allows the channels from the various incoming beams to be switched to different outputs. For example, the first three subchannels of channel 1 of beam 1 are destined for the west coast of North America (beam 11) and are labelled "a11" to "c11" respectively. Similarly, the subchannel contents of channel 2 of beam 1 may be directed to a different output beam, such as beam 7: (this is not shown). However, note that if the channel is only partially utilized, for example channel 1 of beam 1 is shown as having subchannel "d" unused, i.e. the channel is only 75 percent utilized, the remaining capacity (in this case 25 percent) of the channel is "wasted", since the satellite is limited to switching an entire input channel to a single outgoing beam.

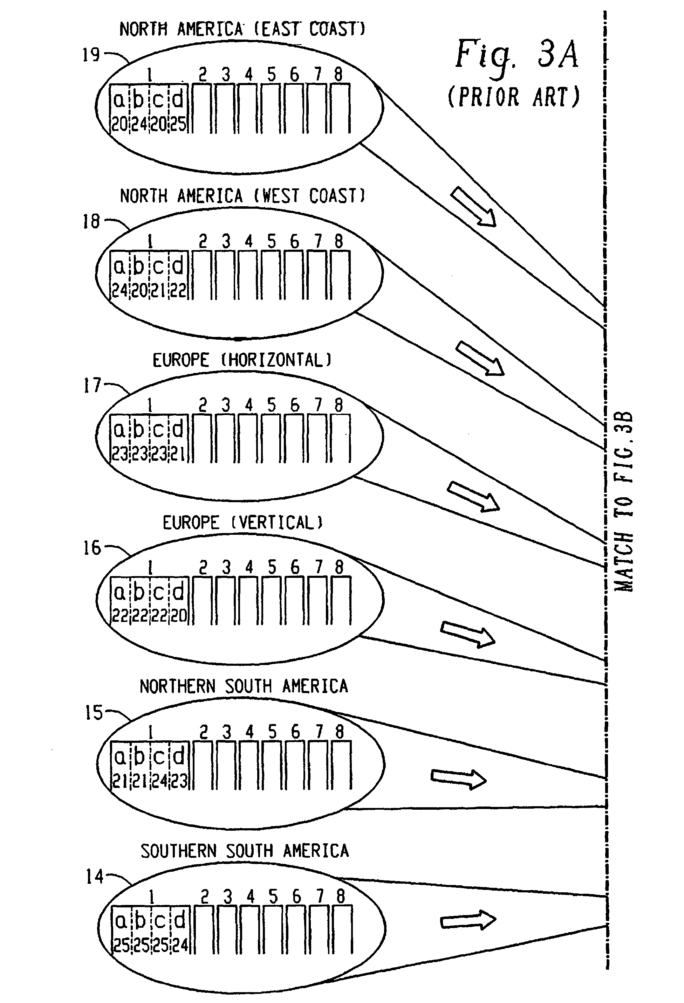

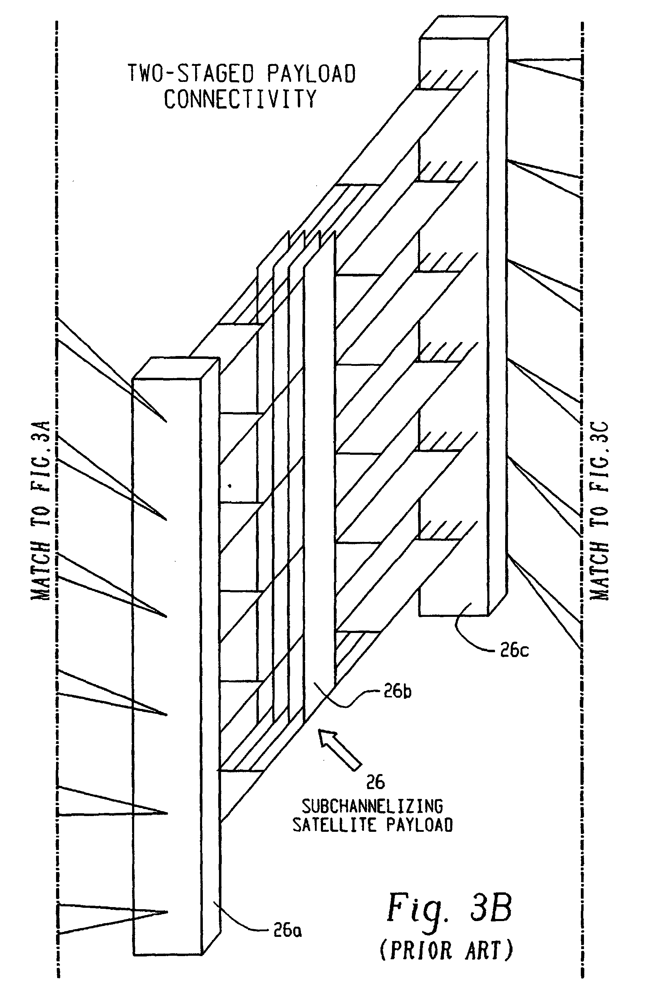

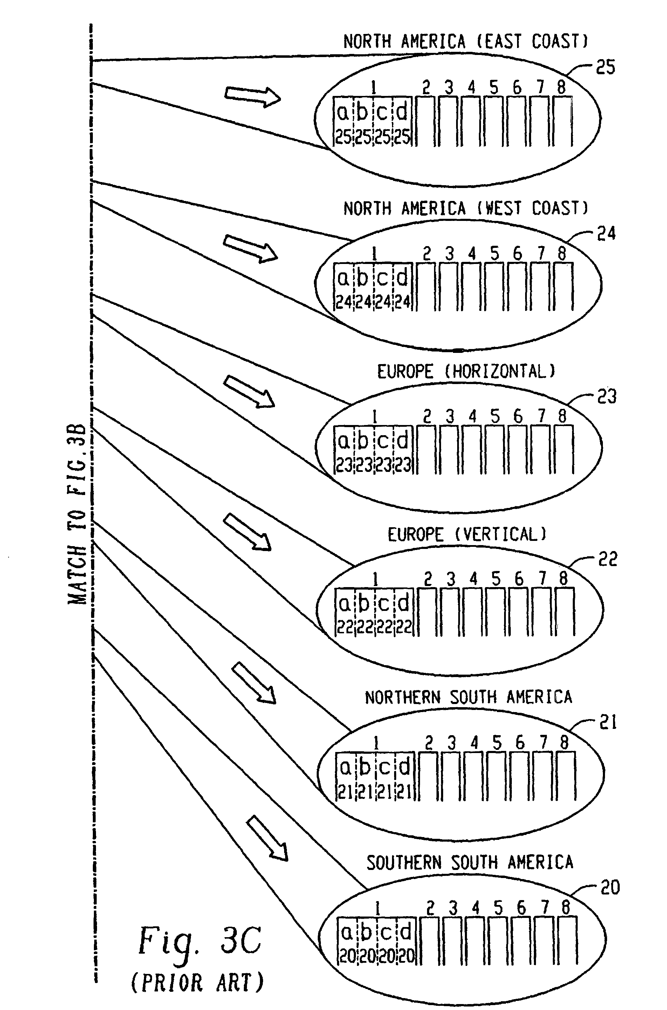

Figure 3 shows a configuration using the teaching of Ito referred to above. The Ito disclosure teaches a two-level subchannelizing system in which, for a 6-by-6 satellite, input beams 14 to 19 are connected to a satellite payload (shown generally at 26) which splits each beam into its respective channels in a first stage demultiplexer (26a). A second stage (26b) employing SAW filters and solid-state (GaAs FET) switches further divides each channel into subchannels, interbeam connects these subchannels and recombines the subchannels into newly constructed channels. These channels are then recombined in the output multiplexer (third) stage (26c) for distribution to the output antennas (20-25).

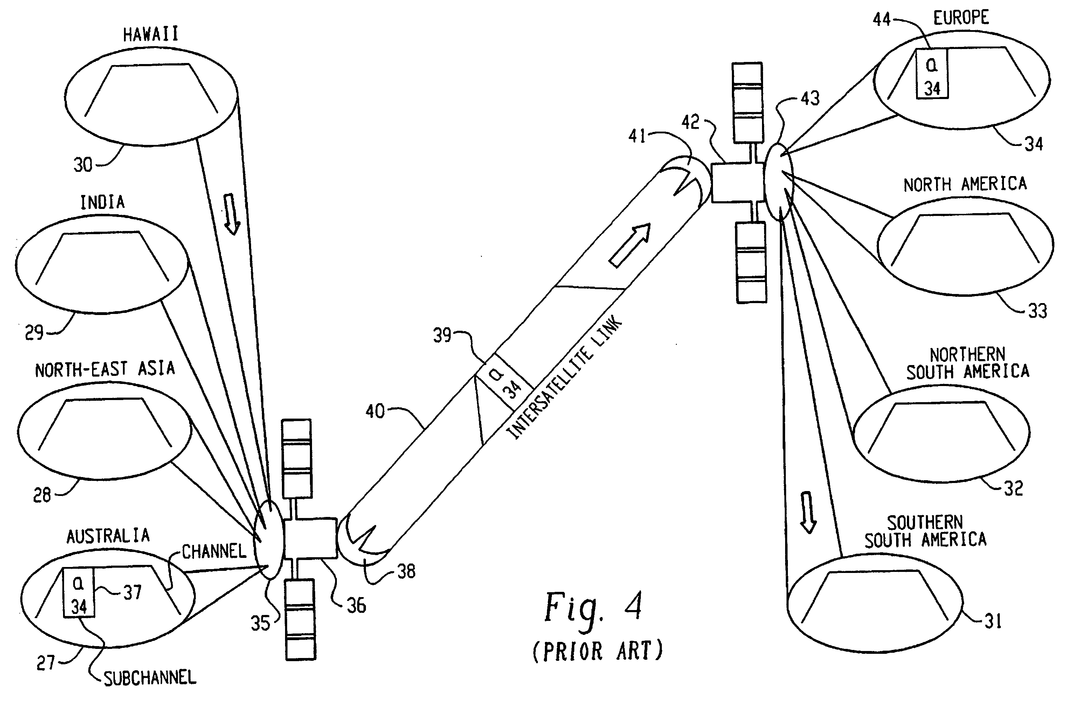

Referring now to Figure 4 in the drawings, a standard prior art communication system using an intersatellite link is shown. Radio-frequency signals comprising each of four incoming beams shown as 27 to 30 respectively, arrive at the input antenna 35 of a satellite 36 located at the equator over (for greatest convenience) the Pacific Ocean. The regions (27 to 30) transmitting to the satellite 36 are shown as being located in Australia, North-East Asia (e.g. Japan), India and Hawaii respectively. Although antenna 35 is shown as a single unit, it may consist of a group of antennas or a single multi-feed orthogonally polarized device.

A second satellite 42 serves the North and South American continents as well as parts of Europe. It would normally be placed at the equator over the Atlantic Ocean. The longitudinal positions of the two satellites 36 and 42 would be such that each satellite is in line of sight of the other. According to this arrangement, an intersatellite link 40 is established between the satellites 36 and 42 and it uses antennas 38 and 41 respectively. The link would normally be of a bandwidth sufficient to handle at least two subchannels (four or more are preferred). The link is preferably at a microwave frequency, e.g. 30 to 60 GHz, but, alternatively, could be at a lower RF frequency, or it could be an optical link using a laser beam or some other type of light source.

If, as shown in this example, Australia is transmitting to Europe, it captures the intersatellite link to the exclusion of the other regions and sends the information "a34" (shown at 37) over the link 40 (shown at 39). The information is forwarded to the appropriate subchannel (shown at 44) in the chosen destination (beam 34). In this case, Europe is the destination chosen, but the information could have been directed to any of the regions being served by satellite 42 provided, of course, there was sufficient channel capacity.

It may be seen in this example of the prior art system that there are severe constraints on the use of the system and that, if the information being transmitted does not require the full bandwidth capacity of the link transponder in satellite 36, there is a potential for waste in the form of power and system utilization. In the example given, the information being transmitted from Australia occupies only 25 percent of the available intersatellite link's channel, (assuming that only one of four available subchannels of equal bandwidth is employed). Although the connectivity problems could be alleviated by providing additional channels in the intersatellite link, this would not address the problem of inefficiency in channel-carrying capacity and would add to the complexity, cost and weight of the satellite payload.

It should be noted that, firstly, the preceding and following discussion give examples only and the invention is not limited to communications satellites over the Pacific and Atlantic Oceans. Secondly, to simplify the drawings, only one channel in each beam is shown. For example, beam 27 (Australia), in addition to the channel containing information 37, would generally also contain additional other channels arriving at the antenna array 35 of satellite 36 . Similarly, each of the other regions (28 to 30 and 31 to 34) would support more than the one channel shown per beam.

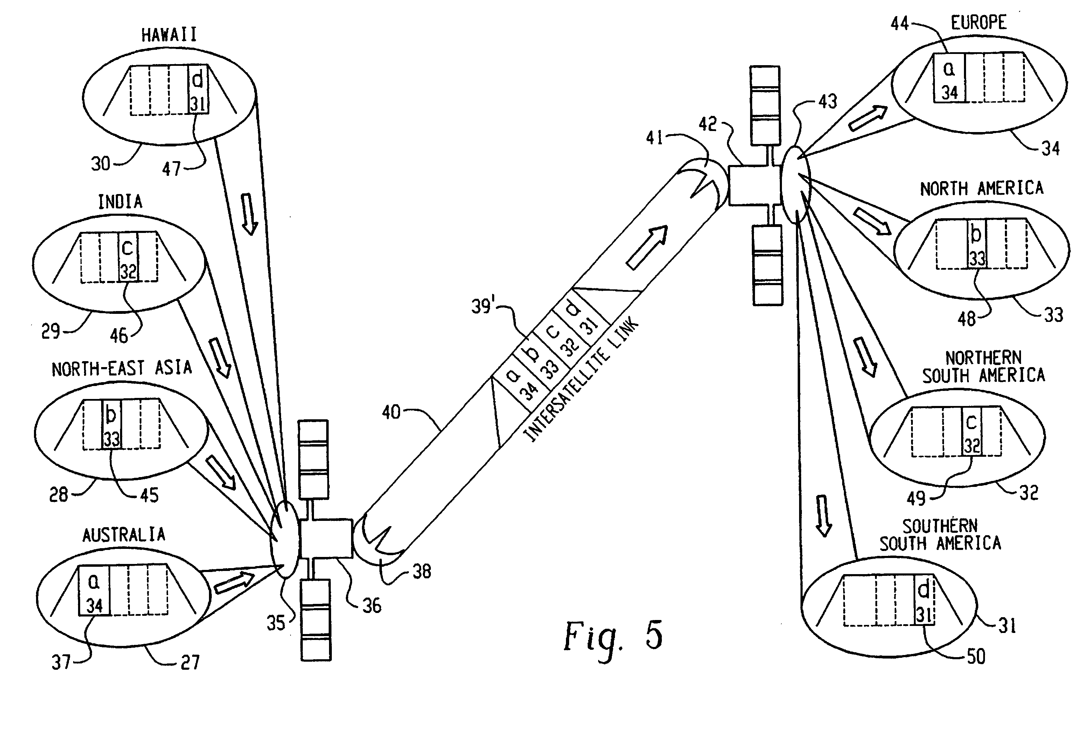

Figure 5 shows the system of Figure 4 embodying the present invention. In the improved system according to the present invention, at least one channel in each of the incoming beams is divided into subchannels. Use may be made of (SAW) technology as described in the Ito patent. Alternatively, the user may choose to employ partial subchannelization as described in our United States Patent referred to above, using either analog SAW technology or a transparent digital processor. The actual method of subchannelizing is not critical and any suitable method taught in the prior art could be used. On board the satellite, the processor acts to interbeam switch information at the subchannel level, as taught in the prior art. The output (intersatellite linking) beam 40, which includes channel 39' and its contents, is treated by the on-board circuitry as any other standard output beam (i.e. it is an output of one of the switch gear output multiplexers that is then routed to the intersatellite link transmitter.) However, the intersatellite beam's frequency may differ, for convenience or security or some other reason, from the frequency of the standard up- or down-link frequencies.

Using the system described, it is now possible for two or more regions to make use of a single channel in the intersatellite link. The first (or "a") subchannel (shown at 37) from Australia transmits to Europe (shown at 44), as described with respect to Figure 4. However, because of the ability to interbeam switch at the subchannel level, it is possible to connect the second (or "b") subchannel (45) from another region (North-East Asia) being served by satellite 36 to another region (in this case North America) being served by satellite 42, the information appearing in the respective second subchannel as shown at 48. Similarly, the third (or "c") subchannel (46) from India may be transmitted to Northern South America (49) and the fourth (or "d") subchannel (47) from Hawaii may be transmitted to Southern South America (50). The ideal situation is shown where the intersatellite link 40 (which is assumed to have four subchannels) is fully utilized and all four items of information from the respective regions 27 to 30 are shown in the intersatellite link channel 39'. Thus by combining an intersatellite link with on-board subchannel switching capability, an improved bent-pipe intersatellite linked system is achieved which maximizes the bandwidth efficiency of the intersatellite link.

In the case described, it should be noted that both satellites 36 and 42 must have subchannel-handling capability. In satellite 36 incoming channels are subchannelized, the subchannels are interbeam switched and finally combined for the intersatellite link feed. In like manner, satellite 42 treats the intersatellite link as it does any other incoming beam and performs the action of subchannelizing, interbeam switching and combining with other subchannels to form new channels for the down links to Earth.

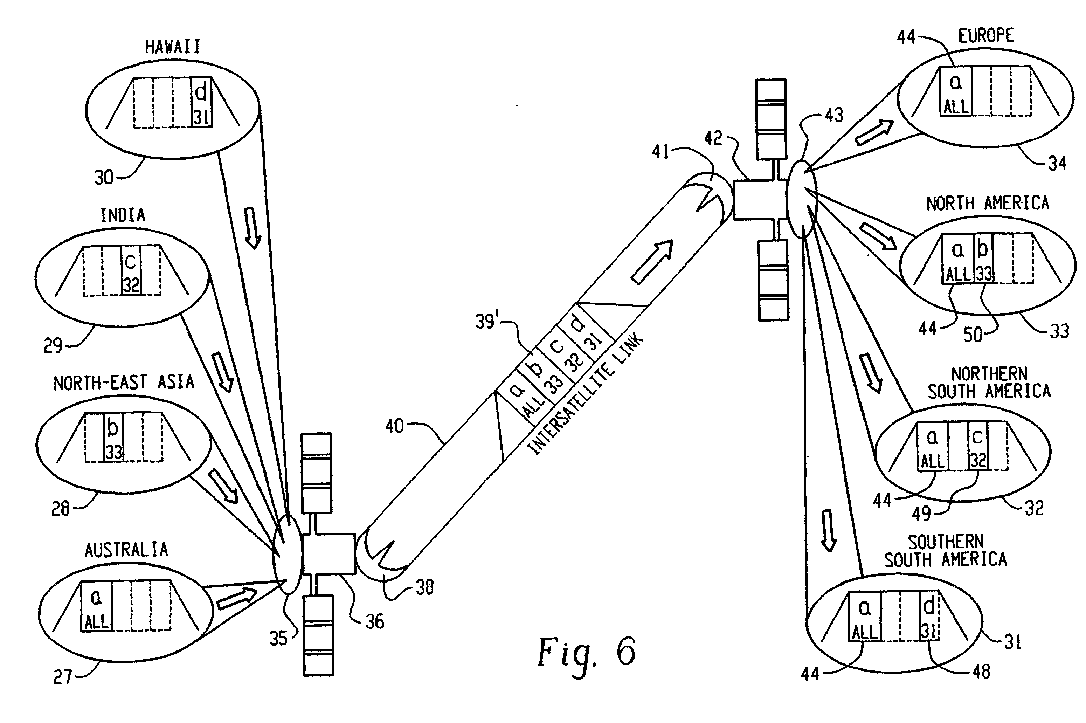

As taught in the prior art, by appropriate switching arrangements on board the satellites, it is possible to place the satellite 42 in broadcast mode. As an example, Figure 6 shows an arrangement whereby information (37) from the Australian up-link may be distributed to all the regions served by satellite 42 as shown at 44 in each region served by satellite 42. It may be noted that this does not impede the relay of single-destination, i.e. non-broadcast, information (46 to 47) by the other three regions being served by satellite 36 to selected regions in the footprints of satellite 42 (shown as 48 to 50). By extension, a limiting case is the possibility for each region served by satellite 36 to broadcast to all regions served by satellite 42, within the limits of satellite transponder, switching and power-handling capacity.

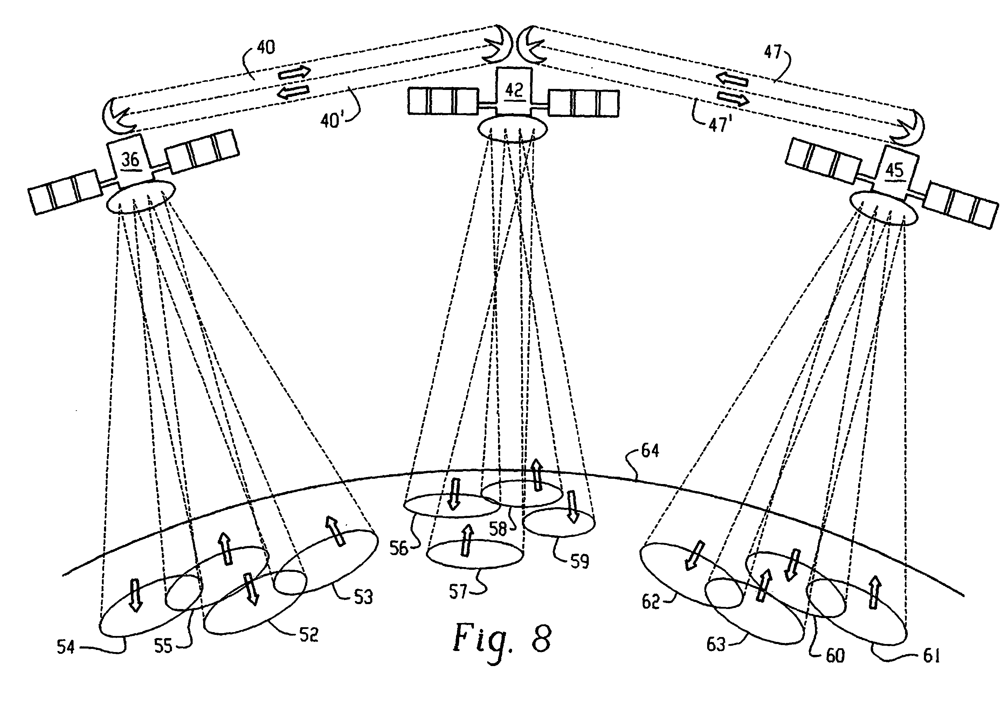

In the general case, a satellite used in this invention may be one in a constellation of such satellites. Figure 8 shows three such satellites, although there may be additional satellites forming a chain or matrix of communications nodes. Each satellite can both receive and transmit information from and to other satellites and from and to the ground.

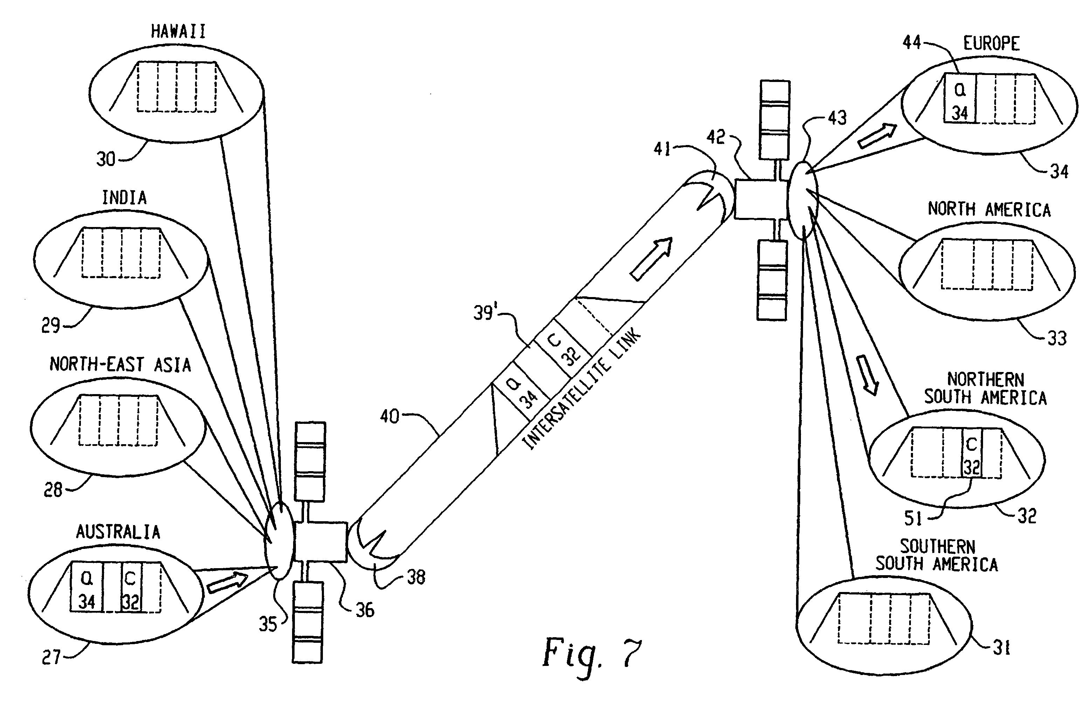

It is also possible to make some limited use of the invention where only one of the satellites is using a capability to subchannelize and interbeam switch. This may be a case when it is decided not to use on-board switching capability or if the satellite is not capable of performing subchannel operations. Figure 7 shows the case where one channel's contents (two subchannels are placed on the beam from Australia) are transmitted over the intersatellite link 40 to satellite 42. In satellite 42 the incoming intersatellite link is subchannelized and interbeam switched to deliver the contents to two down-link beams (in this case Europe at 44 and Northern South America 51 respectively are suggested). It should be apparent to a skilled person that if satellite 36 has subchannel-handling capabilities and satellite 42 does not, then subchannels from two separate sources, e.g. Australia and India, could be combined in satellite 36 for intersatellite transfer and onward transmission to a single terrestrial destination, e.g. Europe.

It should be recognized that, for clarity, only part of the satellite communications system has been shown. Both satellites 36 and 42 would normally be part of a regional system. Figure 8 describes this: however, not all beams are shown. For example, satellite 36 is shown to be receiving two beams (53 and 55) from the Earth (62). Also shown is the intersatellite beam 40 transmitted to satellite 42. However, satellite 36 also transmits beams (52 and 54) to the Earth. In addition, satellite 36 receives communications signals from satellite 42 over the return intersatellite link (40'). To complete the system, satellite 42, in addition to transmitting several beams (shown as 56 and 59) to the Earth, would receive beams (57 and 58) from terrestrial sources as well as the intersatellite beam 40 received from satellite 36. In keeping with the foregoing description of a typical FDM satellite system, the beams to and from satellites 36 and 42 would normally include several channels (e.g. eight) and each channel would consist of several subchannels (e.g. four). As described above, the intersatellite link 40 would be supplemented by a complementary link 40' providing transmissions in the reverse direction i.e. from satellite 42 to satellite 36.

Finally, the system shown could easily be extended to form part of a matrix or constellation of satellites, where direct intersatellite links could be maintained by one satellite with more than one other satellite. In Figure 8, satellite 42 is shown as being directly linked with another satellite shown at 45 via intersatellite links 47 (forward direction) and 47' (return direction). Similar to satellites 36 and 42, satellite 45 has down-links (60 and 62) and up-links (61 and 63). This application of the invention would be particularly useful where geostationary satellites are arranged to provide near-global communications coverage or in the situation where the satellites are not geostationary, but are part of, for example, a constellation of satellites in low-earth or medium-earth orbit.

What has been described is a bent-pipe communications satellite system. In general, at least part of the information contained in M incoming beams to a first satellite may be combined together and transferred by intersatellite link to a second satellite. The second satellite can separate the information out and place the separated information on N outgoing beams. M and N are natural numbers. One limiting case, M=1 and N=2, is a broadcast configuration described with respect to Figure 6 in which satellite 36 does not need subchannelizing capability but satellite 42 does subchannelize the signals. In this limiting case, only one up-link is participating and only two down-links are making use of the broadcast facility.

By way of elaboration, information from the ground in beam 55 uplinked to satellite 36 may be retransmitted back to the ground via a beam such as 52, or may be transmitted to satellite 42 via intersatellite link 40. At this point, the information is treated as any other incoming information and may be downlinked by means of a beam such as 56, or may be forwarded to a further satellite such as 45 for further handling. Although satellites 36 and 45 are shown to be terminations of a chain of satellites, each of these could be linked to additional satellites in addition to satellite 42. Also, in a matrix configuration, each satellite could have intersatellite links to more than two other satellites. Consequently, information in the intersatellite link can come from several different sources (uplinks or intersatellite links) and can be split up and sent to different destinations (downlinks or further intersatellite links).

Another limiting case is where M=2 and N=1. In this case two incoming subchannels are combined in satellite 36 and are directed to a single destination by satellite 42. In this case, satellite 42 would not need subchannelizing capability to handle the signals.

## Claims

1. A multi-beam bent-pipe satellite (36) of the kind that is adapted to receive a plurality of incoming beams of information and to transmit a plurality of outgoing beams of information, wherein the incoming and outgoing beams include channels of information, and wherein at least one of the channels in each beam further includes subchannels (a-d) of information, the satellite comprising:
**[a]** a partial subchannelizing processor including channel switching circuitry adapted to interbeam switch the channels of information, and subchannel switching circuitry in parallel with said channel switching circuitry adapted to select the subchannel information from the incoming beams, and adapted to interbeam switch the subchannel information onto a plurality of outgoing channels, the outgoing channels being further combined with the switched channels into outgoing beams, and
**[b]** an intersatellite link (40) transponder connected to at least one outgoing beam that includes the subchannel switched information, wherein said intersatellite link (40) transponder is adapted to transmit the outgoing beam to another satellite (42).

2. A multi-beam bent-pipe satellite according to claim 1, **characterized in that** said subchannelizing processor includes SAW filters and a solid-state switching network.

3. A multi-beam bent-pipe satellite according to claim 1, **characterized in that** said subchannelizing processor includes a transparent digital processor.

4. A multi-beam bent-pipe satellite according to claim 3, **characterized in that** said transparent digital processor includes digital filters and a digital switching matrix.

5. A multi-beam bent-pipe satellite according to one of claims 1 through 4, **characterized in that** said intersatellite link (40) transponder is adapted to transmit an optical-wavelength beam.

6. A multi-beam bent-pipe satellite according to one of claims 1 through 4, **characterized in that** said intersatellite link (40) transponder is adapted to transmit a microwave frequency wavelength beam.

## Patentansprüche

1. Mehrstrahliger Bent-Pipe-Satellit (36) der Art, welche angepaßt ist, um eine Mehrzahl von einfallenden informationshaltigen Strahlen zu empfangen und eine Mehrzahl von ausgehenden informationshaltigen Strahlen zu übertragen, wobei die einfallenden und ausgehenden Strahlen Informationskanäle beinhalten, und wobei wenigstens einer der Kanäle in jedem Strahl weiter informationshaltige Unterkanäle (a-d) beinhaltet, wobei der Satellit aufweist:
[b] einen Teilunterkanalbildungsprozessor, welcher ein Kanalschaltnetz aufweist, welches angepaßt ist, um die Informationskanäle zwischen Strahlen zu schalten, und ein Unterkanalschaltnetz parallel zu dem Kanalschaltnetz, welches angepaßt ist, um die Unterkanalinformation aus den einfallenden Strahlen auszuwählen, und angepaßt ist, um die Unterkanalinformation zwischen Strahlen zu schalten, und zwar auf eine Mehrzahl von ausgehenden Kanälen, wobei die ausgehenden Kanäle weiter mit den geschalteten Kanälen in ausgehende Strahlen zusammengefaßt sind, und
[c] einen Transponder einer Zwischensatellitenverbindung (40), welcher mit wenigstens einem ausgehenden Strahl verbunden ist, welcher die geschaltete Unterkanalinformation beinhaltet, wobei der Transponder der Zwischensatellitenverbindung (40) angepaßt ist, um die ausgehenden Strahlen an einen anderen Satelliten (42) zu übertragen.

2. Ein mehrstrahliger Bent-Pipe-Satellit gemäß Anspruch 1, ***dadurch gekennzeichnet, daß*** der Unterkanalbildungsprozessor SAW-Filter und ein Halbleiterschaltnetz beinhaltet.

3. Ein mehrstrahliger Bent-Pipe-Satellit gemäß Anspruch 1, ***dadurch gekennzeichnet, daß*** der Unterkanalbildungsprozessor einen transparenten Digitalprozessor beinhaltet.

4. Ein mehrstrahliger Bent-Pipe-Satellit gemäß Anspruch 3, ***dadurch gekennzeichnet, daß*** der transparente Digitalprozessor digitale Filter und eine digitale Schaltmatrix beinhaltet.

5. Ein mehrstrahliger Bent-Pipe-Satellit gemäß einem der Ansprüche 1 bis 4, ***dadurch gekennzeichnet, daß*** der Transponder der Zwischensatellitenverbindung (40) angepaßt ist, um einen Strahl einer optischen Wellenlänge zu übertragen.

6. Ein mehrstrahliger Bent-Pipe-Satellit gemäß einem der Ansprüche 1 bis 4, ***dadurch gekennzeichnet, daß*** der Transponder der Zwischensatellitenverbindung (40) angepaßt ist, um einen Strahl einer Wellenlänge einer Mikrowellenfrequenz zu übertragen.

## Revendications

1. Satellite à faisceaux multiples de type bent-pipe (36) du type adapté pour recevoir une pluralité de faisceaux d'informations entrants et pour émettre une pluralité de faisceaux d'informations sortants, dans lequel les faisceaux entrants et sortants comprennent des canaux d'informations, et dans lequel au moins l'un des canaux dans chaque faisceau comprend, en outre, des sous-canaux (a à d) d'informations, le satellite comprenant :
(a) un processeur de séparation partielle en sous-canaux comprenant des éléments de circuit de commutation de canaux adaptés pour commuter les canaux d'informations entre les faisceaux et des éléments de circuit de sous-canal en parallèle avec lesdits éléments de commutation de canaux adaptés pour sélectionner les informations de sous-canal des faisceaux entrants et adaptés pour commuter les informations de sous-canal entre les faisceaux sur une pluralité de canaux sortants, les canaux sortants étant, en outre, combinés avec les canaux commutés dans les faisceaux sortants, et
(b) un transpondeur de liaison intersatellite (40) connecté à au moins un faisceau sortant qui comprend les informations de sous-canal commutées, dans lequel ledit transpondeur de liaison intersatellite (40) est adapté pour transmettre le faisceau sortant à un autre satellite (42).

2. Satellite à faisceaux multiples de type bent-pipe selon la revendication 1, **caractérisé en ce que** ledit processeur de séparation en sous-canaux comprend des filtres à onde acoustique de surface et un réseau de commutation à semi-conducteurs.

3. Satellite à faisceaux multiples de type bent-pipe selon la revendication 1, **caractérisé en ce que** ledit processeur de séparation en sous-canaux comprend un processeur numérique transparent.

4. Satellite à faisceaux multiples de type bent-pipe selon la revendication 3, **caractérisé en ce que** ledit processeur numérique transparent comprend des filtres numériques et une matrice de commutation numérique.

5. Satellite à faisceaux multiples de type bent-pipe selon l'une des revendications 1 à 4, **caractérisé en ce que** ledit transpondeur de liaison intersatellite (40) est adapté pour transmettre un faisceau de longueur d'onde optique.

6. Satellite à faisceaux multiples de type bent-pipe selon l'une des revendications 1 à 4, **caractérisé en ce que** ledit transpondeur de liaison intersatellite (40) est adapté pour transmettre un faisceau de longueur d'onde hyperfréquence.
